(19) Europäisches Patentamt / European Patent Office / Office européen des brevets

(11) **EP 3 622 095 B1**

(12) **FASCICULE DE BREVET EUROPEEN**

(45) Date de publication et mention
de la délivrance du brevet:
**14.04.2021 Bulletin 2021/15**

(21) Numéro de dépôt: **18723366.3**

(22) Date de dépôt: **26.04.2018**

(51) Int Cl.:
*C22C 1/04* (2006.01)    *C22C 1/02* (2006.01)
*B22F 3/105* (2006.01)    *B33Y 70/00* (2020.01)
*B33Y 10/00* (2015.01)    *C22C 21/00* (2006.01)
*C22C 21/02* (2006.01)

(86) Numéro de dépôt international:
**PCT/FR2018/051066**

(87) Numéro de publication internationale:
**WO 2018/206876 (15.11.2018 Gazette 2018/46)**

(54) **PIECE EN ALLIAGE D'ALUMINIUM ET SON PROCÉDÉ DE FABRICATION**

ALUMINIUMLEGIERUNGSTEIL UND DESSEN HERSTELLUNGSVERFAHREN

ALUMINUM ALLOY PART AND PROCESS FOR MANUFACTURING THEREOF

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **12.05.2017 FR 1754212**

(43) Date de publication de la demande:
**18.03.2020 Bulletin 2020/12**

(73) Titulaire: **C-Tec Constellium Technology Center
38341 Voreppe (FR)**

(72) Inventeurs:
  • **CHEHAB, Bechir**
    **38500 Voiron (FR)**
  • **JARRY, Philippe**
    **38000 Grenoble (FR)**
  • **LEDOUX, Marine**
    **38000 Grenoble (FR)**
  • **PRIGENT, Jocelyn**
    **38340 VOREPPE (FR)**

(74) Mandataire: **Constellium - Propriété Industrielle
C-TEC Constellium Technology Center
Propriété Industrielle
Parc Economique Centr'Alp
725, rue Aristide Bergès
CS10027
38341 Voreppe (FR)**

(56) Documents cités:
**EP-A1- 2 796 229        FR-A1- 2 969 176
US-A1- 2016 138 400      US-A1- 2017 120 393**

  • **MASATOSHI ENOMOTO ET AL: "Surface
    Treatment of Aluminum Alloy with Laser
    Irradition to Increase Wear Resistance",
    JOURNAL OF METASTABLE AND
    NANOCRYSTALLINE MATERIALS, vol. 539-543,
    1 janvier 2007 (2007-01-01), pages 404-410,
    XP055445928, CH ISSN: 1422-6375, DOI:
    10.4028/www.scientific.net/MSF.539-543.404**

**Description**

**DOMAINE TECHNIQUE**

Le domaine technique de l'invention est un procédé de fabrication d'une pièce en alliage d'aluminium, mettant en œuvre une technique de fabrication additive.

**ART ANTERIEUR**

Depuis les années 80, les techniques de fabrication additive se sont développées. Elles consistent à mettre en forme une pièce par ajout de matière, ce qui est à l'opposé des techniques d'usinage, qui visent à enlever de la matière. Autrefois cantonnée au prototypage, la fabrication additive est à présent opérationnelle pour fabriquer des produits industriels en série, y compris des pièces métalliques.

Le terme « fabrication additive » est défini, selon la norme française XP E67-001, comme un "ensemble des procédés permettant de fabriquer, couche par couche, par ajout de matière, un objet physique à partir d'un objet numérique". La norme ASTM F2792 (janvier 2012) définit également la fabrication additive. Différentes modalités de fabrication additive sont aussi définies et décrites dans la norme ISO/ASTM 17296-1. Le recours à une fabrication additive pour réaliser une pièce en aluminium, avec une faible porosité, a été décrit dans le document WO2015/006447. L'application de couches successives est généralement réalisée par application d'un matériau dit d'apport, puis fusion ou frittage du matériau d'apport à l'aide d'une source d'énergie de type faisceau laser, faisceau d'électrons, torche plasma ou arc électrique. Quelle que soit la modalité de fabrication additive appliquée, l'épaisseur de chaque couche ajoutée est de l'ordre de quelques dizaines ou centaines de microns.

Un moyen de fabrication additive est la fusion ou le frittage d'un matériau d'apport prenant la forme d'une poudre. Il peut s'agir de fusion ou de frittage par un faisceau d'énergie.

On connait notamment les techniques de frittage sélectif par laser (selective laser sintering, SLS ou direct metal laser sintering, DMLS), dans lequel une couche de poudre de métal ou d'alliage métallique est appliquée sur la pièce à fabriquer et est frittée sélectivement selon le modèle numérique avec de l'énergie thermique à partir d'un faisceau laser. Un autre type de procédé de formation de métal comprend la fusion sélective par laser (selective laser melting, SLM) ou la fusion par faisceau d'électrons (electron beam melting, EBM), dans lequel l'énergie thermique fournie par un laser ou un faisceau d'électrons dirigé est utilisée pour fondre sélectivement (au lieu de fritter) la poudre métallique afin qu'elle fusionne à mesure qu'elle refroidit et se solidifie.

On connait également le dépôt par fusion laser (laser melting deposition, LMD) dans lequel la poudre est projetée et fondue par un faisceau laser de façon simultanée.

La demande de brevet WO2016/209652 décrit un procédé pour fabriquer un aluminium à haute résistance mécanique comprenant : la préparation d'une poudre d'aluminium atomisée ayant une ou plusieurs tailles de poudre approximative désirée et une morphologie approximative ; le frittage de la poudre pour former un produit par fabrication additive ; la mise en solution ; la trempe ; et le revenu de l'aluminium fabriqué de façon additive.

La demande de brevet US2017/0016096 décrit un procédé de fabrication d'une pièce par fusion localisée notamment obtenue par l'exposition d'une poudre à un faisceau d'énergie de type faisceau d'électrons ou faisceau laser, la poudre étant constituée d'un alliage d'aluminium dont la teneur en cuivre est comprise entre 5 % et 6 % en masse, la teneur en magnésium étant comprise entre 2.5 % et 3.5 % en masse.

La demande de brevet EP2796229 divulgue un procédé de formation d'un alliage métallique d'aluminium renforcé par dispersion comprenant les étapes consistant à : obtenir, sous une forme de poudre, une composition d'alliage d'aluminium qui est susceptible d'acquérir une microstructure renforcée par dispersion ; diriger un faisceau laser à basse densité d'énergie sur une partie de la poudre ayant la composition de l'alliage ; retirer le faisceau laser de la partie de la composition d'alliage en poudre ; et refroidir la partie de la composition d'alliage en poudre à une vitesse supérieure ou égale à environ $10^6$ °C par seconde, pour former ainsi l'alliage métallique d'aluminium renforcé par dispersion. La méthode est particulièrement adaptée pour un alliage ayant une composition selon la formule suivante : $Al_{comp}Fe_aSi_bX_c$, dans laquelle X représente au moins un élément choisi dans le groupe constitué par Mn, V, Cr, Mo, W, Nb et Ta ; « a » va de 2,0 à 7,5 % en atomes ; « b » va de 0,5 à 3,0 % en atomes ; « c » va de 0,05 à 3,5 % en atomes ; et le complément est de l'aluminium et des impuretés accidentelles, à condition que le rapport [Fe+Si]/Si se situe dans la gamme d'environ 2,0:1 à 5,0:1.

La demande de brevet EP3026135 décrit un alliage de moulage comprenant 87 à 99 parts en poids d'aluminium et de silicium, 0,25 à 0,4 parts en poids de cuivre et 0,15 à 0,35 parts en poids d'une combinaison d'au moins deux éléments parmi Mg, Ni et Ti. Cet alliage de moulage est adapté pour être pulvérisé par un gaz inerte pour former une poudre, la poudre étant utilisée pour former un objet par fabrication additive par laser, l'objet subissant ensuite un traitement de revenu.

La demande de brevet US2016/0138400 décrit des alliages comprenant de 3 à 12 % en poids de fer, de 0,1 à 3 % en poids de vanadium, de 0,1 à 3 % en poids de silicium et de 1 à 6 % en poids de cuivre, reste aluminium et impuretés, adapté pour les techniques de fabrication additive.

La publication « Characterization of Al-Fe-V-Si heat-resistant aluminum alloy components fabricated by selective laser melting », Journal of Material Research, Vol. 30, No. 10, May 28, 2015, décrit la fabrication par SLM de composants résistants à la chaleur de composition, en % en poids, Al-8.5Fe-1.3V-1.7Si.

La publication « Microstructure and mechanical properties of Al-Fe-V-Si aluminum alloy produced by electron beam melting », Materials Science&Engineering A659(2016)207-214, décrit des pièces du même alliage que dans l'article précédent obtenues par EBM.

Les propriétés mécaniques des pièces d'aluminium obtenues par fabrication additive dépendent de l'alliage formant le métal d'apport, et plus précisément de sa composition, des paramètres du procédé de fabrication additive ainsi que des traitements thermiques appliqués. Les inventeurs ont déterminé une composition d'alliage qui, utilisée dans un procédé de fabrication additive, permet d'obtenir des pièces aux performances mécaniques remarquables, tout en obtenant un procédé dont la productivité est avantageuse. En particulier, les pièces obtenues ont des caractéristiques équivalentes voire améliorées par rapport à l'art antérieur (notamment un alliage 8009), par exemple en termes de porosité et/ou de dureté. De même, grâce à la présente invention, le procédé est optimisé et la productivité améliorée. Par exemple, il est possible de diminuer la densité d'énergie et/ou d'augmenter la vitesse lors de l'utilisation de l'alliage selon la présente invention, par rapport à ce qui est possible avec un alliage de l'art antérieur, en particulier un alliage 8009.

## EXPOSE DE L'INVENTION

Un premier objet de l'invention est un procédé de fabrication d'une pièce selon la revendication 1, comportant une formation de couches métalliques solides successives, superposées les unes aux autres, chaque couche décrivant un motif défini à partir d'un modèle numérique, chaque couche étant formée par le dépôt d'un métal, dit métal d'apport, le métal d'apport étant soumis à un apport d'énergie de façon à entrer en fusion et à constituer, en se solidifiant, ladite couche, dans lequel le métal d'apport prend la forme d'une poudre, dont l'exposition à un faisceau énergétique résulte en une fusion suivie d'une solidification de façon à former une couche solide, le procédé étant caractérisé en ce que le métal d'apport est un alliage d'aluminium comprenant au moins les éléments d'alliage suivant:

- Si, selon une fraction massique de 4 % à 20 % ;
- Fe, selon une fraction massique de 2 % à 15 %.

L'addition d'une telle teneur en silicium à un alliage contenant du fer permet d'obtenir une pièce de dureté améliorée et une structure granulaire avantageuse diminuant notamment le risque de fissuration, ce qui est en particulier avantageux pour certaines applications, par exemple l'aéronautique. C'est pourquoi il est préférable que la fraction massique de silicium soit d'au moins 5 % et de préférence d'au moins 6 %. Une fraction massique maximale de silicium préférée est de 15 % voire de 13 %. Une fraction massique de fer minimale préférée est de 3 % et de manière préférée de 6 %. Une fraction massique de fer maximale préférée est de 12 %.

L'alliage peut également comporter au moins un, voire au moins deux éléments ou même au moins trois éléments choisis parmi :

- Mn, selon une fraction massique de 0,1 % à 5 %, de préférence d'au plus 2 % et de manière préférée d'au plus 1 % ;
- Ti, selon une fraction massique de 0,01 % à 5 %, de préférence d'au moins 0,1 %, de préférence d'au plus 2 % et de manière préférée d'au plus 1 % ;
- V, selon une fraction massique de 0,1 % à 5 %, de préférence d'au plus 3 % et de manière préférée d'au plus 2 % ;
- Zr, selon une fraction massique de 0,05 % à 5 %, de préférence d'au moins 0,1 %, de préférence d'au plus 3 % et de manière préférée d'au plus 2 % ;
- Cr, selon une fraction massique de 0,05 % à 5 %, de préférence d'au moins 0,1 %, de préférence d'au plus 3 % et de manière préférée d'au plus 2 % ;
- Hf, selon une fraction massique de 0,05 % à 5 %, de préférence d'au moins 0,1 %, de préférence d'au plus 3 % et de manière préférée d'au plus 2 %.

Ces éléments peuvent conduire à la formation de dispersoïdes ou de phases intermétalliques fines permettant d'augmenter la dureté du matériau obtenu.

L'alliage peut également comporter au moins un, voire au moins deux éléments ou même au moins trois éléments choisis parmi :

- Ag, selon une fraction massique de 0,1 à 1 % ;
- Li, selon une fraction massique de 0,1 à 2 %, de préférence de 0,5 à 1,2 % ;

- Zn, selon une fraction massique de 0,1 à 1 %.

Les éléments Ag, Zn et Li peuvent agir sur la résistance du matériau par précipitation durcissante ou par leur effet sur les propriétés de la solution solide.

L'alliage peut également comporter du Mg selon une fraction massique de 0,1 à 7 % et de préférence de 0,5 à 5 %.

Optionnellement on peut ajouter au moins un élément choisi parmi W, Nb, Ta, Y, Yb, Nd, Er, avec une fraction massique d'au moins 0,1 % et d'au plus 5 %, de préférence d'au plus 3 %, et de manière préférée d'au plus 2 %, de façon à former davantage de dispersoïdes ou de phases intermétalliques fines.

Optionnellement on peut également ajouter au moins un élément choisi parmi Co et Ni avec une fraction massique d'au moins 0,1 % et d'au plus 7 %. Avantageusement d'au moins 3 % et de manière préférée d'au moins 4 %, de façon à former davantage de dispersoïdes ou de phases intermétalliques fines.

Optionnellement on peut ajouter au moins un élément choisi parmi La, Ce ou du mishmétal, avec une fraction massique d'au moins 0,1 % et d'au plus 12 %, préférentiellement d'au plus 6 %, de préférence d'au plus 3 %, et de manière préférée d'au plus 2 %.

Optionnellement on peut ajouter au moins un élément choisi parmi Bi, Sr, Ba, Ca, Sb, P et B, avec une fraction massique d'au moins 0,01 % et d'au plus 1 %, et de préférence d'au moins 0,05 % et d'au plus 0,8 %. Cependant dans un mode de réalisation on évite l'addition de Bi, la fraction massique préférée étant alors inférieure à 0,05 %, et de préférence inférieure 0,01 %.

Le matériau comporte une fraction massique en autres éléments ou impuretés inférieure à 0,05 %, soit 500 ppm. La fraction massique cumulée des autres éléments ou impuretés est inférieure à 0,15 %.

Le reste du matériau est de l'aluminium puisqu'il s'agit d'un alliage d'aluminium.

Dans un mode de réalisation préféré de l'invention, l'alliage d'aluminium consiste en, en fraction massique, au moins 5 % et au plus 8 % et de préférence au moins 6 % et au plus 7 % de Si, au moins 6 % et au plus 10 % et de préférence au moins 8 % et au plus 9 % de Fe, au moins 1 % et au plus 1,5 % et de préférence au moins 1,1 % et au plus 1,4 % de V, et au plus 0,5 % et de préférence au moins 0,05 % et au plus 0,3 % de Mn, autres éléments ou impuretés inférieurs à 0,05 %, la fraction massique cumulée des autres éléments ou impuretés étant inférieure à 0,15 %, le reste étant de l'aluminium.

Selon un mode de réalisation, le procédé peut comporter, suite à la formation des couches :

- une mise en solution suivie d'une trempe et d'un revenu, ou
- un traitement thermique typiquement à une température d'au moins 100°C et d'au plus 400°C
- et/ou une compression isostatique à chaud (CIC).

Le traitement thermique peut notamment permettre un dimensionnement des contraintes résiduelles et/ou une précipitation supplémentaire de phases durcissantes.

Le traitement CIC peut notamment permettre d'améliorer les propriétés d'allongement et les propriétés en fatigue. La compression isostatique à chaud peut être réalisée avant, après ou à la place du traitement thermique.

Avantageusement, la compression isostatique à chaud est réalisée à une température de 250°C à 550°C et de préférence de 300°C à 450°C, à une pression de 500 à 3000 bars et pendant une durée de 0,5 à 10 heures.

Le traitement thermique et/ou la compression isostatique à chaud permet en particulier d'augmenter la dureté du produit obtenu.

Selon un autre mode de réalisation, adapté aux alliages à durcissement structural, on peut réaliser une mise en solution suivie d'une trempe et d'un revenu de la pièce formée et/ou une compression isostatique à chaud. La compression isostatique à chaud peut dans ce cas avantageusement se substituer à la mise en solution. Cependant le procédé selon l'invention est avantageux car il ne nécessite de préférence pas de traitement de mise en solution suivi de trempe. La mise en solution peut avoir un effet néfaste sur la résistance mécanique dans certains cas en participant à un grossissement des dispersoïdes ou des phases intermétalliques fines. Selon un mode de réalisation, le procédé selon la présente invention comporte en outre optionnellement un traitement d'usinage, et/ou un traitement de surface chimique, électrochimique ou mécanique, et/ou une tribofinition. Ces traitements peuvent être réalisés notamment pour réduire la rugosité et/ou améliorer la résistance à la corrosion et/ou améliorer la résistance à l'initiation de fissures en fatigue.

Optionnellement, il est possible de réaliser une déformation mécanique de la pièce, par exemple après la fabrication additive et/ou avant le traitement thermique.

Un deuxième objet de l'invention est une pièce métallique selon la revendication 10, obtenue par un procédé selon le premier objet de l'invention.

Un troisième objet de la divulgation ne faisant pas partie de l'invention, est une poudre comprenant, de préférence consistant en, un alliage d'aluminium comprenant au moins les éléments d'alliage suivant :

- Si, selon une fraction massique de 4 % à 20 % ;
- Fe, selon une fraction massique de 2 % à 15 %.

L'alliage d'aluminium de la poudre peut également comprendre :

• optionnellement au moins un élément choisi parmi :

- Mn, selon une fraction massique de 0,1 % à 5 %, de préférence d'au plus 2 % et de manière préférée d'au plus 1 % ;
- Ti, selon une fraction massique de 0,01 % à 5 %, de préférence d'au moins 0,1 %, de préférence d'au plus 2 % et de manière préférée d'au plus 1 % ;
- V, selon une fraction massique de 0,1 % à 5 %, de préférence d'au plus 3 % et de manière préférée d'au plus 2 % ;
- Zr, selon une fraction massique de 0,05 % à 5 %, de préférence d'au moins 0,1 %, de préférence d'au plus 3 % et de manière préférée d'au plus 2 % ;
- Cr, selon une fraction massique de 0,05 % à 5 %, de préférence d'au moins 0,1 %, de préférence d'au plus 3 % et de manière préférée d'au plus 2 % ;
- Hf, selon une fraction massique de 0,05 % à 5 %, de préférence d'au moins 0,1 %, de préférence d'au plus 3 % et de manière préférée d'au plus 2 %.

• optionnellement au moins un élément choisi parmi :

- Ag, selon une fraction massique de 0,1 à 1 % ;
- Li, selon une fraction massique de 0,1 à 2 %, de préférence de 0,5 à 1,2 % ;
- Zn, selon une fraction massique de 0,1 à 1 %.

• optionnellement l'élément Mg selon une fraction massique de 0,1 à 7 % et de préférence de 0,5 à 5 %.
• optionnellement au moins un élément choisi parmi :

- W, Nb, Ta, Y, Yb, Nd, Er, avec une fraction d'au moins 0,1 % et d'au plus 5 % de préférence d'au plus 3 % et de manière préférée d'au plus 2 %.

• optionnellement au moins un élément choisi parmi Co et Ni avec une fraction massique d'au moins 0,1 % et d'au plus 7 %.
• optionnellement au moins un élément choisi parmi

- La, Ce ou du mishmétal, avec une fraction massique d'au moins 0,1 % et d'au plus 12 %, préférentiellement d'au plus 6 % de préférence d'au plus 3 % et de manière préférée d'au plus 2 %.

• optionnellement au moins un élément choisi parmi

- Bi, Sr, Ba, Ca, Sb, P et B, avec une fraction massique d'au moins 0,01 % et d'au plus 1 % et de préférence d'au moins 0,05 % et d'au plus 0,8 %.

Le matériau de la poudre comporte une fraction massique en autres éléments ou impuretés inférieure à 0,05 %, soit 500 ppm. La fraction massique cumulée des autres éléments ou impuretés est inférieure à 0,15 %.

Le reste du matériau de la poudre est de l'aluminium puisqu'il s'agit d'un alliage d'aluminium.

Dans un mode de réalisation préféré, l'alliage d'aluminium de la poudre consiste en, en fraction massique, au moins 5 % et au plus 8 % et de préférence au moins 6 % et au plus 7 % de Si, au moins 6 % et au plus 10 % et de préférence au moins 8 % et au plus 9 % de Fe, au moins 1 % et au plus 1,5 % et de préférence au moins 1,1 % et au plus 1,4 % de V, et au plus 0,5 % et de préférence au moins 0,05 % et au plus 0,3 % de Mn, autres éléments ou impuretés inférieurs à 0,05 %, la fraction massique cumulée des autres éléments ou impuretés étant inférieure à 0,15 %, le reste étant de l'aluminium.

D'autres avantages et caractéristiques ressortiront plus clairement de la description qui va suivre et des exemples non limitatifs, et représentés sur les figures listées ci-dessous.

**FIGURES**

La figure 1 est un schéma illustrant un procédé de fabrication additive de type SLM, ou EBM.

La figure 2A montre la structure granulaire obtenue avec un alliage de référence 8009, la flèche indiquant la direction de croissance de la pièce.

La figure 2B montre la structure granulaire obtenue avec un alliage selon l'invention, la flèche indiquant la direction de croissance de la pièce.

## DESCRIPTION DETAILLEE DE L'INVENTION

Dans la description, sauf indication contraire :

- la désignation des alliages d'aluminium est conforme à la nomenclature établie par The Aluminum Association ;
- les teneurs en éléments chimiques sont désignées en % et représentent des fractions massiques.

La figure 1 décrit de façon générale un mode de réalisation, dans lequel le procédé de fabrication additive selon l'invention est mis en œuvre. Selon ce procédé, le matériau d'apport 25 se présente sous la forme d'une poudre en alliage. Une source d'énergie, par exemple une source laser ou une source d'électrons 31, émet un faisceau d'énergie par exemple un faisceau laser ou un faisceau d'électrons 32. La source d'énergie est couplée au matériau d'apport par un système optique ou de lentilles électromagnétiques 33, le mouvement du faisceau pouvant ainsi être déterminé en fonction d'un modèle numérique M. Le faisceau d'énergie 32 suit un mouvement selon le plan longitudinal XY, décrivant un motif dépendant du modèle numérique M. La poudre 25 est déposée sur un support 10. L'interaction du faisceau d'énergie 32 avec la poudre 25 engendre une fusion sélective de cette dernière, suivie d'une solidification, résultant en la formation d'une couche $20_1...20_n$. Lorsqu'une couche a été formée, elle est recouverte de poudre 25 du métal d'apport et une autre couche est formée, superposée à la couche préalablement réalisée. L'épaisseur de la poudre formant une couche peut par exemple être de 10 à 100 $\mu$m. Ce mode de fabrication additive est typiquement connu sous le nom de fusion sélective par laser (selective laser melting, SLM) quand le faisceau d'énergie est un faisceau laser, le procédé étant dans ce cas avantageusement exécuté à pression atmosphérique, et sous le nom de fusion par faisceau d'électrons (electron beam melting EBM) quand le faisceau d'énergie est un faisceau d'électrons, le procédé étant dans ce cas avantageusement exécuté à pression réduite, typiquement inférieure à 0,01 bar et de préférence inférieure à 0,1 mbar. Dans le cas de la fusion sélective par laser, la vitesse V de déplacement du faisceau laser exprimée en mm/s et l'énergie locale ou densité d'énergie E exprimée en $J/mm^3$ sont avantageusement telles que E > 0,2 V - 35 de façon à obtenir des couches de faible porosité, la vitesse V étant d'au moins 180 mm/s. Dans un mode de réalisation avantageux, permettant notamment d'obtenir des couches de faible porosité à plus grande vitesse ou avec une énergie plus faible qu'avec les alliages selon l'art antérieur, E < 0,3 V + 30, la vitesse V étant d'au moins 180 mm/s.

Dans un autre mode de réalisation, la couche est obtenue par frittage sélectif par laser (selective laser sintering, SLS ou direct metal laser sintering, DMLS), la couche de poudre d'alliage selon l'invention étant frittée sélectivement selon le modèle numérique choisi avec de l'énergie thermique fournie par un faisceau laser.

Dans encore un autre mode de réalisation non décrit par la figure 1, la poudre est projetée et fondue de façon simultanée par un faisceau généralement laser. Ce procédé est connu sous le nom de dépôt par fusion laser (laser melting deposition).

D'autres procédés peuvent être utilisés, notamment ceux connus sous les noms de dépôt direct d'énergie (Direct Energy Deposition, DED), dépôt direct de métal (Direct Metal Deposition, DMD), dépôt direct par laser (Direct Laser Deposition, DLD), technologie de dépôt par laser (Laser Deposition Technology, LDT), dépôt de métal par laser (Laser Metal Deposition, LMD), ingénierie de formes nettes par laser (Laser Engineering Net Shaping, LENS), technologie de plaquage par laser (Laser Cladding Technology, LCT), ou technologie de fabrication de formes libres par laser (Laser Freeform Manufacturing Technology, LFMT).

Dans un mode de réalisation, le procédé selon l'invention est utilisé pour la réalisation d'une pièce hybride comprenant une partie 10 obtenue par des procédés classiques de laminage et/ou de filage et/ou de moulage et/ou de forgeage optionnellement suivi d'usinage et une partie solidaire 20 obtenue par fabrication additive. Ce mode de réalisation peut également convenir pour la réparation de pièces obtenues par les procédés classiques.

On peut également, dans un mode de réalisation de l'invention, utiliser le procédé selon l'invention pour la réparation de pièces obtenues par fabrication additive. Les pièces métalliques 20 obtenues par un procédé selon l'invention ont avantageusement, à l'état brut de fabrication, une dureté Vickers Hv0.1 d'au moins 160 et de préférence d'au moins 170 ou même d'au moins 180. La dureté Vickers peut notamment être déterminée en suivant la méthode décrite dans les normes EN ISO 6507-1 (Matériaux métalliques - Essai de dureté Vickers - Partie 1 : Méthode d'essai), EN ISO 6507-2 (Matériaux métalliques - Essai de dureté Vickers - Partie 2 : Vérification et étalonnage des machines d'essais), EN ISO 6507-3 (Matériaux métalliques - Essai de dureté Vickers - Partie 3 : Étalonnage des blocs de référence) et EN ISO 6507-4 (Matériaux métalliques - Essai de dureté Vickers - Partie 4 : Tables des valeurs de duretés).

La poudre de la présente divulgation peut présenter au moins l'une des caractéristiques suivantes :

- taille moyenne de particules de 10 à 100 $\mu$m, de préférence de 20 à 60 $\mu$m ;
- forme sphérique. La sphéricité d'une poudre peut par exemple être déterminée en utilisant un morphogranulomètre ;
- bonne coulabilité. La coulabilité d'une poudre peut par exemple être déterminée selon la norme ASTM B213 ;
- faible porosité, de préférence de 0 à 5 %, plus préférentiellement de 0 à 2 %, encore plus préférentiellement de 0 à 1 % en volume. La porosité peut notamment être déterminée par microscopie à balayage électronique ou par pycnométrie à l'hélium (voir la norme ASTM B923) ;
- absence ou faible quantité (moins de 10 %, de préférence moins de 5 % en volume) de petites particules (1 à 20 % de la taille moyenne de la poudre), dites satellites, qui collent aux particules plus grosses.

La poudre peut être obtenue par des procédés classiques d'atomisation à partir d'un alliage selon l'invention sous forme liquide ou solide ou, alternativement, la poudre peut être obtenue par mélange de poudres primaires avant l'exposition au faisceau énergétique, les différentes compositions des poudres primaires ayant une composition moyenne correspondant à la composition de l'alliage selon l'invention.

On peut également ajouter des particules nanométriques infusibles, par exemple des oxydes ou des particules $TiB_2$ ou des nanoparticules de carbone, avant la préparation de la poudre par atomisation et/ou lors du dépôt de la poudre et/ou lors du mélange des poudres primaires.

La poudre peut être obtenue par exemple par atomisation par jet de gaz, atomisation plasma, atomisation par jet d'eau, atomisation par ultrasons, atomisation par centrifugation, électrolyse et sphéroïdisation, ou broyage et sphéroïdisation.

De préférence, la poudre est obtenue par atomisation par jet de gaz. Le procédé d'atomisation par jet de gaz commence avec la coulée d'un métal fondu à travers une buse. Le métal fondu est ensuite atteint par des jets de gaz neutres, tels que de l'azote ou de l'argon, et atomisé en très petites gouttelettes qui se refroidissent et se solidifient en tombant à l'intérieur d'une tour d'atomisation. Les poudres sont ensuite recueillies dans une canette. Le procédé d'atomisation par jet de gaz présente l'avantage de produire une poudre ayant une forme sphérique, contrairement à l'atomisation par jet d'eau qui produit une poudre ayant une forme irrégulière. Un autre avantage de l'atomisation par jet de gaz est une bonne densité de poudre, notamment grâce à la forme sphérique et à la distribution de taille de particules. Encore un autre avantage de ce procédé est une bonne reproductibilité de la distribution de taille de particules.

Après sa fabrication, la poudre peut être étuvée, notamment afin de réduire son humidité. La poudre peut également être conditionnée et stockée entre sa fabrication et son utilisation.

La poudre peut notamment être utilisée dans les applications suivantes :

- frittage sélectif par laser (Selective Laser Sintering ou SLS en anglais) ;
- frittage direct du métal par laser (Direct Metal Laser Sintering ou DMLS en anglais) ;
- frittage sélectif par chauffage (Selective Heat Sintering ou SHS en anglais) ;
- fusion sélective par laser (Selective Laser Melting ou SLM en anglais) ;
- fusion par faisceau d'électrons (Electron Beam Melting ou EBM en anglais) ;
- dépôt par fusion laser (Laser Melting Deposition en anglais) ;
- dépôt direct par apport d'énergie (Direct Energy Deposition ou DED en anglais) ;
- dépôt direct de métal (Direct Metal Deposition ou DMD en anglais) ;
- dépôt direct par laser (Direct Laser Deposition ou DLD en anglais) ;
- technologie de dépôt par Laser (Laser Deposition Technology ou LDT en anglais) ;
- ingénierie de formes nettes par laser (Laser Engineering Net Shaping ou LENS en anglais) ;
- technologie de plaquage par laser (Laser Cladding Technology ou LCT en anglais) ;
- technologie de fabrication de formes libres par laser (Laser Freeform Manufacturing Technology ou LFMT en anglais) ;
- dépôt par fusion laser (Laser Metal Deposition ou LMD en anglais) ;
- pulvérisation à froid (Cold Spray Consolidation ou CSC en anglais) ;
- fabrication additive par friction (Additive Friction Stir ou AFS en anglais) ;
- frittage par étincelle au plasma ou frittage flash (Field Assisted Sintering Technology, FAST ou spark plasma sintering en anglais) ; ou
- soudage par friction rotative (Inertia Rotary Friction Welding ou IRFW.

L'invention sera décrite plus en détails dans l'exemple ci-après.

L'invention n'est pas limitée aux modes de réalisation décrits dans la description ci-avant ou dans les exemples ci-après, et peut varier largement dans le cadre de l'invention telle que définie par les revendications jointes à la présente description.

**EXEMPLE**

Dans cet exemple des pièces ont été élaborées par le procédé SLM précédemment décrit.

Des poudres en alliage 8009 et en alliage selon la présente divulgation ont été préparées.

Une analyse granulométrique de la poudre en alliage 8009 a été réalisée selon la norme ISO 1332 à l'aide d'un granulomètre Malvern 2000. La courbe décrivant l'évolution de la fraction volumique en fonction du diamètre des particules formant la poudre décrit une distribution assimilable à une distribution gaussienne. Si $d_{10}$, $d_{50}$ et $d_{90}$ représentent respectivement les fractiles à 10 %, à 50 % (médiane) et à 90 % de la distribution obtenue, on peut définir un taux d'uniformité $\sigma = \frac{d_{90}-d_{10}}{d_{50}}$ ainsi qu'une déviation standard $\varepsilon = \frac{d_{90}}{d_{10}}$. Pour la poudre considérée, on a mesuré $\sigma$ = 4,1 ± 0,1 % et $\varepsilon$ = 1,5 ± 0,1 %. Les valeurs de $d_{10}$, $d_{50}$ et $d_{90}$ étaient, respectivement, 33,5 μm, 52,3 μm et 81,2 μm.

La poudre en alliage selon l'invention a été obtenue par mélange de la poudre primaire en alliage 8009 et d'une poudre de silicium de granulométrie de 10 à 45 μm.

La composition des pièces fabriquées a été déterminée par ICP-OES et est donnée en pourcentage de fraction massique dans le tableau suivant.

**Tableau 1**

|      | Si  | Fe  | Mn   | V   |
|------|-----|-----|------|-----|
|      | 6,8 | 8,2 | 0,19 | 1,1 |
| **8009** | 1,8 | 8,4 | 0,23 | 1,2 |

Dans les essais qui suivent, la source laser 31 est un laser Nd/Yag de puissance 400 W.

Des parallélépipèdes cubiques, de dimension 1 cm x 1 cm x 1 cm ont été formés selon ce procédé, par l'UTBM (Université de Technologie de Belfort Montbéliard), en empilant différentes couches formées.

Différentes conditions de densité d'énergie E de la source laser 31 et de vitesse de déplacement V du faisceau 32 impactant la poudre 25 ont été testées. On a observé le niveau de porosité des cubes obtenus et classé les résultats par un indice de 1 à 4 (1 : faible porosité, 4 : forte porosité). La relation entre la densité d'énergie E et les paramètres du procédé est connue de l'homme du métier et peut par exemple être trouvée à l'équation (2) de la référence M. Fisher et al. Materials Science and Engineering C 62 (2016) pages 852-859.

Les résultats sont présentés dans le Tableau 2.

**Tableau 2**

| Essai | E : Densité d'énergie (J/mm³) | V : Vitesse (mm/s) | Indice de porosité | | 0,2 V - 35 | 0,3 V + 30 |
|-------|-------------------------------|---------------------|------|-----------|------------|------------|
|       |                               |                     | 8009 | Invention |            |            |
| 1     | 138                           | 563                 | 3    | 1         | 77,6       | 198,9      |
| 2     | 206                           | 563                 | 1    | 1         | 77,6       | 198,9      |
| 3     | 92                            | 563                 | 3    | 1         | 77,6       | 198,9      |
| 4     | 114                           | 648                 | 4    | 1         | 94,6       | 224,4      |
| 5     | 200                           | 417                 | 1    | 1         | 48,4       | 155,1      |
| 6     | 120                           | 714                 | 4    | 1         | 107,8      | 244,2      |
| 7     | 140                           | 465                 | 3    | 1         | 58         | 169,5      |
| 8     | 210                           | 465                 | 1    | 1         | 58         | 169,5      |
| 9     | 131                           | 507                 | 2    | 1         | 66,4       | 182,1      |
| 10    | 153                           | 616                 | 3    | 1         | 88,2       | 214,8      |
| 11    | 102                           | 616                 | 2    | 1         | 88,2       | 214,8      |
| 12    | 126                           | 507                 | 3    | 1         | 66,4       | 182,1      |
| 13    | 189                           | 507                 | 1    | 1         | 66,4       | 182,1      |
| 14    | 83                            | 714                 | 3    | 2         | 107,8      | 244,2      |

(suite)

| Essai | E : Densité d'énergie (J/mm$^3$) | V : Vitesse (mm/s) | Indice de porosité | | 0,2 V - 35 | 0,3 V + 30 |
|---|---|---|---|---|---|---|
| | | | 8009 | Invention | | |
| 15 | 219 | 465 | 1 | 1 | 58 | 169,5 |
| 16 | 138 | 563 | 2 | 1 | 77,6 | 198,9 |
| 17 | 138 | 563 | 2 | 1 | 77,6 | 198,9 |
| 18 | 138 | 563 | 2 | 1 | 77,6 | 198,9 |

D'après le Tableau 2 ci-avant, l'alliage utilisé selon la présente divulgation permet d'obtenir des résultats équivalents voire meilleurs que ceux obtenus avec l'alliage 8009 en termes de porosité. Avec le procédé SLM de cet exemple, pour de nombreuses combinaisons densité d'énergie / vitesse, l'alliage utilisé selon la divulgation permet d'obtenir une faible porosité alors que l'alliage 8009 ne le permet pas. On constate en particulier que pour 0,2 V - 35 < E < 0,3 V + 30, la porosité est faible pour l'alliage utilisé selon l'invention (niveau 1) alors qu'elle est plus élevée pour l'alliage 8009 (niveau 2 ou supérieur). Pour une même densité d'énergie, l'alliage utilisé selon la divulgation permet donc d'utiliser une vitesse plus élevée. Il est entendu que l'équation décrite dans ce paragraphe n'est utilisable que pour le procédé SLM. Les valeurs de densité d'énergie E et de vitesse V, ainsi que l'équation seraient différentes avec un autre procédé. L'homme du métier saurait adapter la densité d'énergie E et la vitesse V dans un autre procédé pour optimiser le couple densité d'énergie-vitesse pour l'alliage utilisé selon la présente divulgation.

L'avantage de l'alliage utilisé selon la présente divulagtion est qu'il permet une plus large gamme de choix pour la densité d'énergie E et la vitesse V afin d'obtenir un indice de porosité satisfaisant. Elle permet en particulier d'augmenter la vitesse V et/ou de diminuer la densité d'énergie E par rapport à l'alliage 8009, tout en conservant une porosité satisfaisante. Le procédé est donc optimisé et la productivité améliorée.

Des mesures de la dureté Vickers Hv0,1 ont été réalisées sur les pièces obtenues dans les conditions de l'essai 8. La dureté moyenne obtenue sur 64 mesures pour chaque pièce était de 181 Hv0,1 pour la pièce selon l'invention alors qu'elle était de 158 Hv0,1 pour la pièce obtenue avec l'alliage 8009.

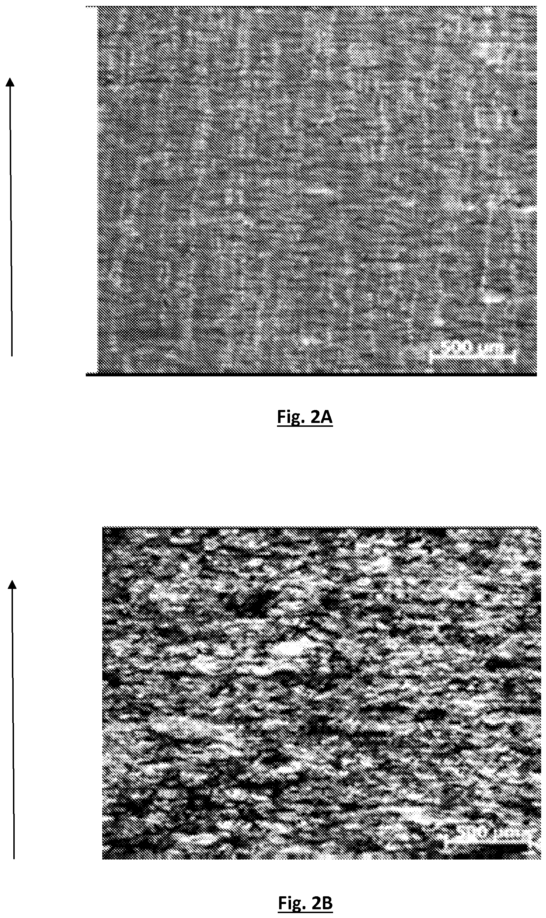

La structure granulaire a été observée après une attaque Barker, les résultats sont présentés sur le Figure 2. La flèche indique la direction de croissance de la pièce. La structure granulaire de la pièce obtenue avec l'alliage 8009 (voir Figure 2A) présente une croissance par épitaxie de grains colonnaires parallèles à la direction de croissance et traversant plusieurs couches, dont la dimension peut atteindre quelques millimètres. Cette structure conduit très probablement à des propriétés mécaniques non isotropes et à l'augmentation de la fraction surfacique de porosité. Au contraire, la structure granulaire obtenue par le procédé selon l'invention (voir Figure 2B) est fine et ne présente pas de grains colonnaires traversant plusieurs couches.

## Revendications

1. Procédé de fabrication d'une pièce (20) comportant une formation de couches métalliques solides successives ($20_1...20_n$), superposées les unes aux autres, chaque couche décrivant un motif défini à partir d'un modèle numérique (*M*), chaque couche étant formée par le dépôt d'un métal (25), dit métal d'apport, le métal d'apport étant soumis à un apport d'énergie de façon à entrer en fusion et à constituer, en se solidifiant, ladite couche, dans lequel le métal d'apport prend la forme d'une poudre (25), dont l'exposition à un faisceau énergétique (32) résulte en une fusion suivie d'une solidification de façon à former une couche solide ($20_1...20_n$),
le procédé étant **caractérisé en ce que** le métal d'apport (25) est un alliage d'aluminium comprenant au moins les éléments d'alliage suivant :

   - Si, selon une fraction massique de 4 % à 20 % ;
   - Fe, selon une fraction massique de 2 % à 15 %;

   optionnellement au moins un élément choisi parmi:

   - Mn, selon une fraction massique de 0,1% à 5 %;
   - Ti, selon une fraction massique de 0,01% à 5%;
   - V, selon une fraction massique de 0,1% à 5%;
   - Zr, selon une fraction massique de 0,05% à 5%;

- Cr, selon une fraction massique de 0,05% à 5%;
- Hf, selon une fraction massique de 0,05% à 5%;

optionnellement au moins un élément choisi parmi:

- Ag, selon une fraction massique de 0,1 à 1%;
- Li, selon une fraction massique de 0,1 à 2%;
- Zn, selon une fraction massique de 0,1 à 1%;

optionnellement l'élément Mg selon une fraction massique de 0,1 à 7%; optionnellement au moins un élément choisi parmi W, Nb, Ta, Y, Yb, Nd, Er, avec une fraction massique d'au moins 0,1% et d'au plus 5%; optionnellement au moins un élément choisi parmi Co et Ni avec une fraction massique d'au moins 0,1% et d'au plus 7%; optionnellement au moins un élément choisi parmi La, Ce ou du mischmétal, avec une fraction massique d'au moins 0,1% et d'au plus 12%; optionnellement au moins un élément choisi parmi Bi, Sr, Ba, Ca, Sb, P et B, avec une fraction massique d'au moins 0,01 % et d'au plus 1%; une fraction massique en autres éléments ou impuretés inférieure à 0,05%, la fraction massique cumulée des autres éléments ou impuretés étant inférieure à 0,15 %; reste aluminium.

2. Procédé selon la revendication 1, dans lequel l'alliage d'aluminium comporte au moins un élément choisi parmi :

- Mn, selon une fraction massique d'au plus 2 % et de manière préférée d'au plus 1 % ;
- Ti, selon une fraction massique d'au moins 0,1 %, de préférence d'au plus 2 % et de manière préférée d'au plus 1 % ;
- V, selon une fraction massique d'au plus 3 % et de manière préférée d'au plus 2 % ;
- Zr, selon une fraction massique d'au moins 0,1 %, de préférence d'au plus 3 % et de manière préférée d'au plus 2 % ;
- Cr, selon une fraction massique d'au moins 0,1 %, de préférence d'au plus 3 % et de manière préférée d'au plus 2 % ;
- Hf, selon une fraction massique d'au moins 0,1 %, de préférence d'au plus 3 % et de manière préférée d'au plus 2 %.

3. Procédé selon l'une quelconque des revendications précédentes, dans lequel l'alliage d'aluminium comporte au moins un élément choisi parmi :

- Ag, selon une fraction massique de 0,1 à 1 % ;
- Li, selon une fraction massique de 0,5 à 1,2 % ;
- Zn, selon une fraction massique de 0,1 à 1 %.

4. Procédé selon l'une quelconque des revendications précédentes, dans lequel l'alliage d'aluminium comporte également l'élément Mg selon une fraction massique de 0,5 à 5 %.

5. Procédé selon l'une quelconque des revendications précédentes, dans lequel l'alliage d'aluminium comporte également au moins un élément choisi parmi :

- W, Nb, Ta, Y, Yb, Nd, Er, avec une fraction d'au plus 3 %, et de manière préférée d'au plus 2 %.

6. Procédé selon l'une quelconque des revendications précédentes dans lequel l'alliage d'aluminium comporte également au moins un élément choisi parmi Co et Ni avec une fraction massique d'au moins 3% et de manière préférée d'au moins 4%.

7. Procédé selon l'une quelconque des revendications précédentes, dans lequel l'alliage d'aluminium comporte également au moins un élément choisi parmi :

- La, Ce ou du mishmétal, avec une fraction massique d'au plus 6 %, de préférence d'au plus 3 %, et de manière préférée d'au plus 2 %.

8. Procédé selon l'une quelconque des revendications précédentes, dans lequel l'alliage d'aluminium comporte également au moins un élément choisi parmi :

   - Bi, Sr, Ba, Ca, Sb, P et B, avec une fraction massique d'au moins 0,05 % et d'au plus 0,8 %.

9. Procédé selon l'une quelconque des revendications précédentes, comportant, suite à la formation des couches $(20_1...20_n)$,

   - une mise en solution suivie d'une trempe et d'un revenu, ou
   - un traitement thermique typiquement à une température d'au moins 100°C et d'au plus 400°C,
   - et/ou une compression isostatique à chaud.

10. Pièce métallique (20) obtenue par un procédé objet de l'une quelconque des revendications précédentes.

11. Pièce métallique selon la revendication 9 caractérisée, à l'état brut de fabrication, par une dureté Vickers Hv0,1 d'au moins 160 et de préférence d'au moins 170 ou même d'au moins 180.

**Fig. 1**

**Patentansprüche**

1. Verfahren zur Herstellung eines Teils (20), umfassend die Bildung aufeinanderfolgender fester Metallschichten

($20_1...20_n$), die übereinander liegen, wobei jede Schicht ein Muster beschreibt, das ausgehend von einem digitalen Modell (M) definiert ist, wobei jede Schicht durch Aufbringen eines Metalls (25), des so genannten Zusatzmetalls gebildet wird, wobei dem Zusatzmetall Energie zugeführt wird, um es zu erschmelzen und durch Erstarren die Schicht zu bilden, wobei das Zusatzmetall die Form eines Pulvers (25) annimmt, dessen Bestrahlung mit einem Energiestrahl (32) ein Erschmelzen und anschließendes Erstarren bewirkt, um eine feste Schicht ($20_1...20_n$) zu bilden,

wobei das Verfahren **dadurch gekennzeichnet ist, dass** das Zusatzmetall (25) eine Aluminiumlegierung ist, die mindestens die folgenden Legierungselemente aufweist:

- Si, in einem Massenanteil von 4% bis 20%;
- Fe, in einem Massenanteil von 2% bis 15%;

wahlweise mindestens ein Element, das ausgewählt ist aus:

- Mn, in einem Massenanteil von 0,1% bis 5%;
- Ti, in einem Massenanteil von 0,01% bis 5%;
- V, in einem Massenanteil von 0,1% bis 5%;
- Zr, in einem Massenanteil von 0,05% bis 5%;
- Cr, in einem Massenanteil von 0,05% bis 5%;
- Hf, in einem Massenanteil von 0,05% bis 5%;

wahlweise mindestens ein Element, das ausgewählt ist aus:

- Ag, in einem Massenanteil von 0,1 bis 1%;
- Li, in einem Massenanteil von 0,1 bis 2%;
- Zn, in einem Massenanteil von 0,1 bis 1%;

wahlweise das Element Mg in einem Massenanteil von 0,1 bis 7%; wahlweise mindestens ein Element, das ausgewählt ist aus W, Nb, Ta, Y, Yb, Nd, Er, mit einem Massenanteil von mindestens 0,1% und höchstens 5%; wahlweise mindestens ein Element, das ausgewählt ist aus Co und Ni mit einem Massenanteil von mindestens 0,1% und höchstens 7%; wahlweise mindestens ein Element, das ausgewählt ist aus La, Ce oder Mischmetall, mit einem Massenanteil von mindestens 0,1% und höchstens 12%; wahlweise mindestens ein Element, das ausgewählt ist aus Bi, Sr, Ba, Ca, Sb, P und B, mit einem Massenanteil von mindestens 0,01% und höchstens 1%; einen Massenanteil an weiteren Elementen oder Verunreinigungen von weniger als 0,05%, wobei der Gesamtmassenanteil an weiteren Elementen oder Verunreinigungen weniger als 0,15% beträgt; Rest Aluminium.

2. Verfahren nach Anspruch 1, wobei die Aluminiumlegierung mindestens ein Element aufweist, das ausgewählt ist aus:

- Mn, in einem Massenanteil von höchstens 2% und bevorzugt höchstens 1%;
- Ti, in einem Massenanteil von mindestens 0,1%, vorzugsweise höchstens 2% und bevorzugt höchstens 1%;
- V, in einem Massenanteil von höchstens 3% und bevorzugt höchstens 2%;
- Zr, in einem Massenanteil von mindestens 0,1%, vorzugsweise höchstens 3% und bevorzugt höchstens 2%;
- Cr, in einem Massenanteil von mindestens 0,1%, vorzugsweise höchstens 3% und bevorzugt höchstens 2%;
- Hf, in einem Massenanteil von mindestens 0,1%, vorzugsweise höchstens 3% und bevorzugt höchstens 2%.

3. Verfahren nach irgendeinem der vorhergehenden Ansprüche, wobei die Aluminiumlegierung mindestens ein Element aufweist, das ausgewählt ist aus:

- Ag, in einem Massenanteil von 0,1 bis 1%;
- Li, in einem Massenanteil von 0,5 bis 1,2%;
- Zn, in einem Massenanteil von 0,1 bis 1%.

4. Verfahren nach irgendeinem der vorhergehenden Ansprüche, wobei die Aluminiumlegierung auch das Element Mg in einem Massenanteil von 0,5 bis 5% aufweist.

5. Verfahren nach irgendeinem der vorhergehenden Ansprüche, wobei die Aluminiumlegierung auch mindestens ein Element aufweist, das ausgewählt ist aus:

- W, Nb, Ta, Y, Yb, Nd, Er, mit einem Anteil von höchstens 3% und bevorzugt höchstens 2%.

**6.** Verfahren nach irgendeinem der vorhergehenden Ansprüche, wobei die Aluminiumlegierung auch mindestens ein Element aufweist, das ausgewählt ist aus Co und Ni mit einem Massenanteil von mindestens 3% und bevorzugt mindestens 4%.

**7.** Verfahren nach irgendeinem der vorhergehenden Ansprüche, wobei die Aluminiumlegierung auch mindestens ein Element aufweist, das ausgewählt ist aus:

- La, Ce oder Mischmetall, mit einem Massenanteil von höchstens 6%, vorzugsweise höchstens 3 % und bevorzugt höchstens 2 %.

**8.** Verfahren nach irgendeinem der vorhergehenden Ansprüche, wobei die Aluminiumlegierung auch mindestens ein Element umfasst, das ausgewählt ist aus:

- Bi, Sr, Ba, Ca, Sb, P und B, mit einem Massenanteil von mindestens 0,05% und höchstens 0,8%.

**9.** Verfahren nach irgendeinem der vorhergehenden Ansprüche, umfassend nach der Bildung der Schichten ($20_1$ ... $20_n$)

- ein Lösungsglühen mit anschließendem Abschrecken und Auslagern, oder
- eine Wärmebehandlung, typischerweise bei einer Temperatur von mindestens 100°C und höchstens 400°C,
- und/oder ein isostatisches Heißpressen.

**10.** Metallteil (20), das mit einem Verfahren nach irgendeinem der vorhergehenden Ansprüche erhalten wird.

**11.** Metallteil nach Anspruch 9, gekennzeichnet im Rohzustand durch eine Vickershärte Hv0,1 von mindestens 160 und vorzugsweise mindestens 170 oder sogar mindestens 180.

**Claims**

**1.** A process for manufacturing a part (20) including a formation of successive solid metal layers ($20_1$ ... $20_n$), superposed on one another, each layer describing a pattern defined from a numerical model (M) , each layer being formed by the deposition of a metal (25), referred to as filler metal, the filler metal being subjected to an input of energy so as to melt and form, by solidifying, said layer, wherein the filler metal takes the form of a powder (25), the exposure of which to an energy beam (32) results in melting followed by a solidification so as to form a solid layer ($20_1$...$20_n$), the process being **characterised in that** the filler metal (25) is an aluminium alloy comprising at least the following alloying elements:

- Si, in a weight fraction of from 4% to 20%;
- Fe, in a weight fraction of from 2% to 15% optionally at least one element selected from:
- Mn, in a weight fraction of from 0.1% to 5%;
- Ti, in a weight fraction of from 0.01% to 5%;
- V, in a weight fraction of from 0.1% to 5%;
- Zr, in a weight fraction of from 0.05% to 5%;
- Cr, in a weight fraction of from 0.05% to 5%;
- Hf, in a weight fraction of from 0.05% to 5%;

optionally at least one element selected from:

- Ag, in a weight fraction of 0.1 to 1%;
- Li, in a weight fraction of from 0.1 to 2%;
- Zn, in a weight fraction of from 0.1 to 1%;

optionally the element Mg in a weight fraction of from 0.1 to 7%; optionally at least one element selected from W, Nb, Ta, Y, Yb, Nd, Er, with a weight fraction of at least 0.1% and at most 5%;
optionally at least one element selected from Co and Ni with a weight fraction of at least 0.1% and at most 7%;
optionally at least one element selected from La, Ce or mischmetal, with a weight fraction of at least 0.1% and at most 12%;
optionally at least one element selected from Bi, Sr, Ba, Ca, Sb, P and B, with a weight fraction of at least 0.01% and at most 1%;
a weight fraction of other elements or impurities less than 0.05%, the cumulative weight fraction of other elements or impurities being less than 0.15%; remains aluminium.

2. The process according to claim 1, wherein the aluminium alloy includes at least one element selected from:

   - Mn, in a weight fraction of at most 2% and in a preferred manner at most 1%;
   - Ti, in a weight fraction of at least 0.1%, preferably at most 2% and in a preferred manner at most 1% ;
   - V, in a weight fraction of at most 3% and in a preferred manner at most 2%;
   - Zr, in a weight fraction of at least 0.1%, preferably at most 3% and in a preferred manner at most 2%;
   - Cr, in a weight fraction of at least 0.1%, preferably at most 3% and in a preferred manner at most 2%;
   - Hf, in a weight fraction of at least 0.1%, preferably at most 3% and in a preferred manner at most 2%.

3. The process according to any one of the preceding claims, wherein the aluminium alloy includes at least one element selected from:

   - Ag, in a weight fraction of from 0.1 to 1%;
   - Li, in a weight fraction of from 0.5 to 1.2%;
   - Zn, in a weight fraction of from 0.1 to 1%.

4. The process according to any one of the preceding claims, wherein the aluminium alloy also includes the element Mg in a weight fraction of 0.5 to 5%.

5. The process according to any one of the preceding claims, wherein the aluminium alloy also includes at least one element selected from:

   - W, Nb, Ta, Y, Yb, Nd, Er, with a fraction of at most 3%, and in a preferred manner at most 2%.

6. The process according to any one of the preceding claims wherein the aluminium alloy also includes at least one element selected from Co and Ni with a weight fraction of at least 3% and in a preferred manner at least 4%.

7. The process according to any one of the preceding claims, wherein the aluminium alloy also includes at least one element selected from:

   - La, Ce or mishmetal, with a weight fraction of at most 6%, preferably at most 3%, and in a preferred manner at most 2%.

8. The process according to any one of the preceding claims, wherein the aluminium alloy also includes at least one element selected from:

   - Bi, Sr, Ba, Ca, Sb, P and B, with a weight fraction of at least 0.05% and at most 0.8%.

9. The process according to any one of the preceding claims, including, after forming the layers ($20_1$ ... $20_n$),

   - a solution heat treatment followed by a quenching and an aging, or
   - a heat treatment typically at a temperature of at least 100°C and at most 400°C,
   - and/or a hot isostatic compression.

10. A metal part (20) obtained by a process which is the subject of any one of the preceding claims.

11. The metal part according to claim 9 **characterised, in** the as-manufactured state, by a Vickers hardness Hv0.1 of at least 160 and preferably of at least 170 or even of at least 180.

**Fig. 2A**

**Fig. 2B**

**RÉFÉRENCES CITÉES DANS LA DESCRIPTION**

**Documents brevets cités dans la description**

- WO 2015006447 A
- WO 2016209652 A
- US 20170016096 A
- EP 2796229 A
- EP 3026135 A
- US 20160138400 A

**Littérature non-brevet citée dans la description**

- Characterization of Al-Fe-V-Si heat-resistant aluminum alloy components fabricated by selective laser melting. *Journal of Material Research,* 28 Mai 2015, vol. 30 (10
- Microstructure and mechanical properties of Al-Fe-V-Si aluminum alloy produced by electron beam melting. *Materials Science&Engineering A,* 2016, vol. 659, 207-214
- **M. FISHER et al.** *Materials Science and Engineering C,* 2016, vol. 62, 852-859